# EUROPÄISCHE PATENTSCHRIFT

(11) **EP 2 027 047 B1**
(45) Veröffentlichungstag und Bekanntmachung des Hinweises auf die Patenterteilung: **02.12.2009**
(21) Anmeldenummer: 07764596.8
(22) Anmeldetag: 08.06.2007
(51) Int. Cl.: B65G 47/68, B65G 47/31

(54) **TRANSPORTVORRICHTUNG**
TRANSPORT APPARATUS
DISPOSITIF DE TRANSPORT

(30) Priorität: 09.06.2006 DE 102006026915; 21.07.2006 DE 102006034283
(43) Veröffentlichungstag der Anmeldung: 25.02.2009
(73) Patentinhaber: Krones AG, 93073 Neutraubling (DE)
(72) Erfinder: SEGER, Martin, 92318 Neumarkt (DE); HEIGL, Stefan, 94345 Aholfing (DE)
(74) Vertreter: Hannke, Christian
(86) Internationale Anmeldenummer: PCT/EP2007/005092
(87) Internationale Veröffentlichungsnummer: WO 2007/141037

(56) Entgegenhaltungen:
- EP-A2- 0 218 002
- WO-A-98/17556
- DE-U1- 9 407 313
- NL-A- 7 501 573

## Beschreibung

Die Erfindung betrifft eine Transportvorrichtung zum druckarmen Umformen eines mehrreihigen Stroms von Flaschen oder dgl. in mindestens zwei getrennte Einzelreihen gemäß dem Oberbegriff des Anspruchs 1.

Transportvorrichtungen zum druckarmen Umformen eines mehrreihigen Stroms von Flaschen, Dosen oder dgl. Behältern in eine Einzelreihe mittels eines Beschleunigungsförderers und einer schräg über diesen verlaufenden Führung sind seit langem in verschiedenen Varianten bekannt, wobei der Beschleunigungsförderer horizontal (DE 31 29 389 A1) oder mit Querneigung (DE 32 02 991 A1, DE 32 34 286 A1) aufgestellt ist.

Derartige sog. "drucklose Zusammenführungen" kommen überwiegend in Abfüllanlagen und Verpackungsanlagen vor schnell laufenden, einreihig arbeitenden Behandlungsmaschinen wie z. B. Füllern oder Etikettierern zum Einsatz. Sie haben die Aufgabe, die zwischen den Behandlungsmaschinen mit geringer Geschwindigkeit in einem mehrreihigen Strom transportierten Behälter in eine Reihe zusammenzuführen und gleichzeitig zu beschleunigen.

Sollen die besonderen Vorteile der drucklosen Zusammenführungen, wie lärmarme, behälterschonende und störungsfreie Arbeitsweise sowie hohe Durchsatzleistung, auch bei mehrreihig arbeitenden Bearbeitungsmaschinen wie z. B. Verpackungsmaschinen zum Tragen kommen, so muss für jede Einzelreihe bzw. Gasse eine eigene drucklose Zusammenführung vorgesehen werden. Der bauliche Aufwand hierfür ist beträchtlich.

Daneben wurde auch schon vorgeschlagen, mit einer herkömmlichen drucklosen Zusammenführung mit einem einzigen schrägen Führungsmittel durch eine spezielle Regelung der Transportgeschwindigkeiten eine Doppelreihe zu erzeugen und diese dann durch ein Trenngeländer in zwei Einzelreihen aufzuteilen (EP 938 440 B1 , die den Oberbegriff des Anspruchs 1 offenbart). Hierdurch kann der bauliche Aufwand im Vergleich zu einer Doppelanordnung zweier separater druckloser Zusammenführungen gesenkt werden. Es hat sich jedoch gezeigt, dass in den beiden ablaufenden Einzelreihen häufig Lücken auftreten, insbesondere in der vom schrägen Führungsmittel weiter entfernten Einzelreihe. Diese Lücken führen zu Störungen in der nachgeschalteten Behandlungsmaschine.

Der Erfindung liegt die Aufgabe zugrunde, eine Transportvorrichtung zu schaffen, in der mit einem einzigen Beschleunigungsförderer mehrere weitgehend lückenfreie Einzelreihen gebildet werden können.

Diese Aufgabe wird erfindungsgemäß durch die im Anspruch 1 angegebenen Merkmale gelöst.

Vorteilhafte Weiterbildungen der Erfindung sind in den Unteransprüchen angegeben.

Im Nachstehenden werden zwei Ausführungsbeispiele der Erfindung anhand der Zeichnungen beschrieben. Es zeigen:
- Fig. 1: die schematische Draufsicht auf eine Transportvorrichtung zum Erzeugen von zwei getrennten Einzelreihen
- Fig. 2: die schematische Draufsicht auf eine Transportvorrichtung zum Erzeugen von drei getrennten Einzelreihen
- Fig. 3: die schematische Draufsicht auf den Endbereich einer Transportvorrichtung zum Erzeugen von zwei getrennten Einzelreihen mit integrierter Ausscheidung liegender Flaschen.

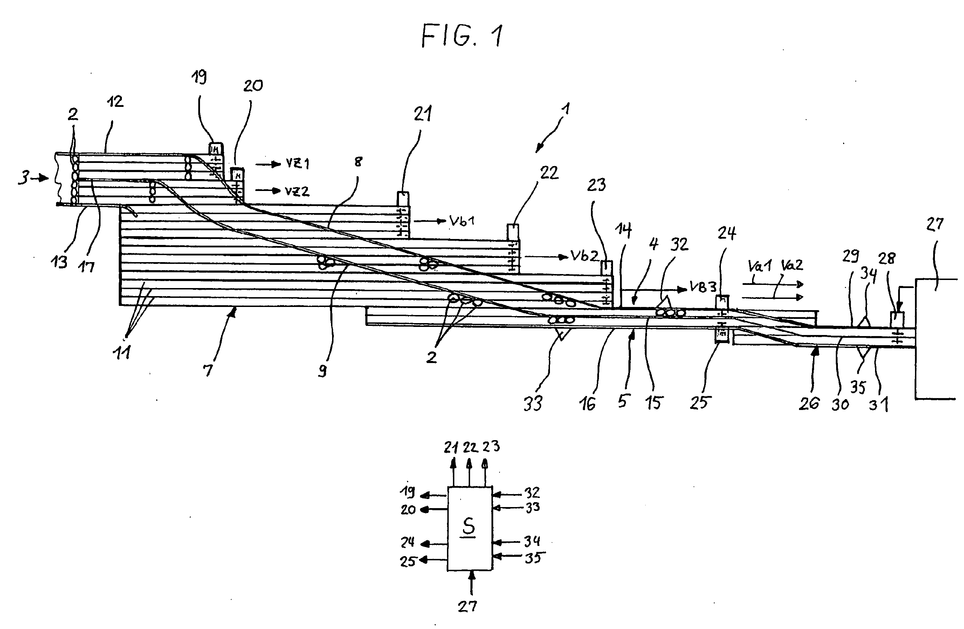

Die Transportvorrichtung 1 für aufrecht stehende Flaschen 2 nach Figur 1 weist einen mehrbahnigen Zuförderer 3, einen sich seitlich daran anschließenden mehrbahnigen Beschleunigungsförderer 7 und zwei sich seitlich an diesen anschließende Abförderer 4, 5 auf, die alle in herkömmlicher Weise aus mit Gleitmittel beaufschlagten Scharnierbandketten 11 aufgebaut sind. Diese sind auf einem nicht gezeigten Traggestell geführt.

Der Zuförderer 3 besitzt sechs, der Beschleunigungsförderer 7 insgesamt zwölf und jeder Abförderer 4, 5 jeweils eine Scharnierbandkette 11. Alle Scharnierbandketten 11 verlaufen parallel zueinander und sind in einer horizontalen Förderebene angeordnet.

Der Zuförderer 3 und die beiden Abförderer 4, 5 sind jeweils mit seitlichen Geländern 12 bis 16 für die Flaschen 2 versehen, wobei das Geländer 15 zwischen den beiden Abförderern 4, 5 verläuft und zu beiden gehört.

An das in Transportrichtung gesehen links liegende Geländer 12 des Zuförderers 3 schließt sich eine kurvenförmige Führung 8 in Form einer Leitschiene an, die anfänglich schräg über den gesamten Zuförderer 3, dann schräg über den gesamten Beschleunigungsförderer 7 verläuft und schließlich in das links liegende Geländer 14 des ersten Abförderers 4 einmündet. Das in Transportrichtung gesehen rechts liegende Geländer 13 des Zuförderers 3 endet frei im Anfangsbereich des Beschleunigungsförderers 7.

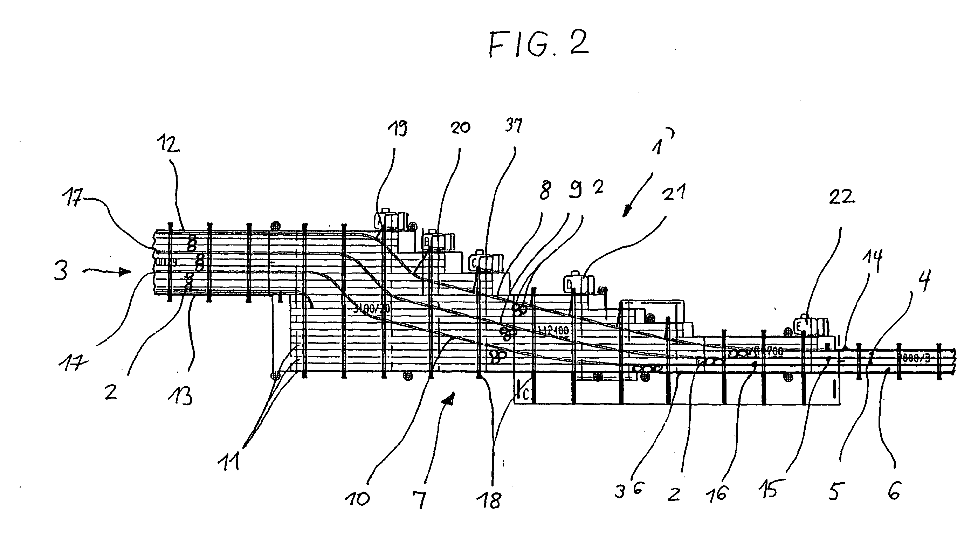

Zumindest im Endbereich des Zuförderers 3 ist mittig eine parallel zu den Geländern 12, 13 ausgerichtete Trennschiene 17 vorgesehen, die den auf dem Zuförderer 3 sechsbahnig ankommenden Flaschenstrom in zwei dreibahnige Teilströme aufteilt. An diese Trennschiene 17 schließt sich eine zweite kurvenförmige Führung 9 in Form einer Leitschiene an, die anfänglich schräg über den rechts liegenden Teilbereich des Zuförderers 3, dann schräg über den gesamten Beschleunigungsförderer 7 und den linken Abförderer 4 verläuft und schließlich in das gemeinsame Geländer 15 der beiden Abförderer 4, 5 einmündet. Die zweite Führung 9 ist mit Abstand und im Wesentlichen parallel zur ersten Führung 8 angeordnet. Die beiden Führungen 8, 9 sind an einem Rahmen 18 (Fig. 2) befestigt, der sich über der Bewegungsbahn der Flaschen 2 auf dem Beschleunigungsförderer 7 erstreckt, so dass sich diese, ausschließlich geleitet von den Führungen 8, 9 frei bewegen können.

Der Zuförderer 3 weist einen ersten Antriebsmotor 19 für die drei linken Scharnierbandketten 11 und einen zweiten Antriebsmotor 20 für die drei rechten Scharnierbandketten 11 auf. Die Trennschiene 17 verläuft exakt über der Nahtstelle zwischen den so gebildeten, gleich großen Abschnitten des Zuförderers 3. Durch die Antriebsmotoren 19, 20 werden die beiden Teilabschnitte des Zuförderers 3 unabhängig voneinander mit einer relativ langsamen Geschwindigkeit Vz1 bzw. Vz2 angetrieben.

Der Zwischenförderer 7 weist einen ersten Antriebsmotor 21 für die vier links liegenden Scharnierbandketten 11, einen zweiten Antriebsmotor 22 für die vier mittleren Scharnierbandketten 11 und einen dritten Antriebsmotor 23 für die vier rechts liegenden Scharnierbandketten 11 auf. Durch die drei Antriebsmotoren 21, 22, 23 werden die insgesamt zwölf Scharnierbandketten 11 des Beschleunigungsförderers 7 in Transportrichtung, d. h. von links nach rechts, mit stufenweise ansteigenden Geschwindigkeiten Vb angetrieben. Dabei können zwei oder auch mehrere nebeneinander liegende Scharnierbandketten 11 durchaus die gleiche Transportgeschwindigkeit aufweisen und es können eine oder mehrere der an der rechten Seite angeordneten Scharnierbandketten 11 wieder etwas langsamer laufen, wie dies bei drucklosen Zusammenführungen allgemein üblich ist. Die Transportgeschwindigkeit der rechts außen liegenden Scharnierbandkette 11 ist vorzugsweise ca. dreimal so groß wie die Transportgeschwindigkeit des Zuförderers. Das vorbeschriebene Geschwindigkeitsverhältnis wird -ähnlich wie bei einer starren Übersetzung- auch beibehalten, wenn der Beschleunigungsförderer 7 insgesamt zur Anpassung an die Anlagenleistung schneller oder langsamer läuft.

Der linke Abförderer 4 weist einen eigenen Antriebsmotor 24 und der rechte Abförderer 5 einen eigenen Antriebsmotor 25 auf. Durch die Antriebsmotoren 24, 25 werden die beiden Abförderer 4, 5 unabhängig voneinander mit einer relativ schnellen Geschwindigkeit Va1 bzw. Va2 angetrieben, die in etwa dreimal so groß ist wie die Geschwindigkeit Vz1 bzw. Vz2 des Zuförderers 3.

An die beiden einbahnigen Abförderer 4, 5 der Transportvorrichtung 1 schließt sich der doppelbahnige Einlaufförderer 26 einer Verpackungsmaschine 27 an, dessen beide Scharnierbandketten 11 durch einen Antriebsmotor 28 mit gleicher Geschwindigkeit synchron zur Verpackungsmaschine 27 angetrieben werden.

Der Einlaufförderer 26 weist zwei seitliche Geländer 29, 31 sowie ein mittleres Geländer 30 auf, das die beiden Einzelreihen voneinander trennt. Die Geländer 14, 15, 16 und 29, 30, 31 gehen ineinander über und bilden zwei getrennte Gassen für den Einlauf der Verpackungsmaschine 27.

Die drei Antriebsmotoren 21, 22, 23 des Beschleunigungsförderers 7 werden durch eine elektronische Steuereinrichtung S in einem vorgegebenen Verhältnis zum Antriebsmotor 28 bzw. zur Verpackungsmaschine 27 angetrieben, derart, dass sich bei jeder Leistung die optimalen Geschwindigkeitssprünge im Bereich des Beschleunigungsförderers 7 einstellen, wo die Flaschen 2 in zwei gleichstarken Teilströmen entlang der Führungen 8, 9 von drei Reihen auf eine Reihe druckarm zusammengeführt und beschleunigt werden.

Die beiden Antriebsmotoren 24, 25 der Abförderer 4, 5 werden gleichfalls durch die Steuereinrichtung S beeinflusst. Hierzu ist diese mit einer Überwachungseinrichtung 34 an der linken Gasse und einer Überwachungseinrichtung 35 an der rechten Gasse des Einlaufförderers 26 verbunden. Erkennt eine Überwachungseinrichtung 34, 35 eine Lücke in einer Flaschenreihe vor der Verpackungsmaschine 27, so wird die Geschwindigkeit des zugehörigen Antriebsmotors 24, 25 gegenüber der Geschwindigkeit des Einlaufförderers 26 leicht erhöht, so lange, bis die Flaschenreihe wieder dicht geschlossen ist. Die linke Überwachungseinrichtung 34 beeinflusst so nur den linken Antriebsmotor 24, während die rechte Überwachungseinrichtung 35 entsprechend nur den rechten Antriebsmotor 25 steuert. Auf diese Weise wird jederzeit eine lückenlose Beschickung der Verpackungsmaschine 27 mit zwei Flaschenreihen realisiert.

Weiter ist an die Steuereinrichtung S eine Überwachungseinrichtung 32 am linken Abförderer 4 und eine Überwachungseinrichtung 33 am rechten Abförderer 5 angeschlossen. Erkennt eine Überwachungsvorrichtung 32, 33 eine Lücke in der Flaschenreihe, so wird die Geschwindigkeit des zugehörigen Antriebsmotors 19 bzw. 20 des linken bzw. rechten Teilabschnitts des Zuförderers 3 vorübergehend leicht erhöht. Die linke Überwachungseinrichtung 32 beeinflusst auf diese Weise nur den Antriebsmotor 19, während die rechte Überwachungseinrichtung 33 entsprechend nur den Antriebsmotor 20 steuert. Durch diese unabhängige Dosierregelung der beiden Teilströme werden diese immer mit der erforderlichen Anzahl von Flaschen 2 beschickt.

Die Überwachungseinrichtungen 32 bis 35 können z. B. durch Lichtschranken, Lückentaster, Staufühler, Zählstrecken oder dgl. gebildet werden. In jedem Falle sorgt die vorbeschriebene Funktion der Steuereinrichtung S mit der Verpackungsmaschine 27 als Leitmaschine für einen störungsfreien Ablauf. Entscheidend ist, dass die auf dem Zuförderer 3 bereits in zwei Teilströmen ankommenden oder durch die Trennschiene 17 in zwei Teilströme eingeteilten Flaschen ohne gegenseitige Beeinflussung die gemeinsame Beschleunigungstrecke 7 passieren und sich dabei an ihrer "eigenen" Führung 8 bzw. 9 zu einer Einzelreihe formieren können. Dass die Flaschen 2 der Teilströme die schneller werdenden Abschnitte des Beschleunigungsförderers 7 mit einer geringfügigen Verzögerung durchlaufen, spielt keine Rolle.

Die Vorrichtung 1' nach Fig. 2 unterscheidet sich von der Vorrichtung 1 nach Fig. 1 im Wesentlichen dadurch, dass hier auf dem Beschleunigungsförderer 7 mit Abstand drei gleich gerichtete, teilweise parallel verlaufende Führungen 8, 9, 10 in Form von Leitschienen am Rahmen 18 befestigt sind. Dementsprechend erfolgt die Zufuhr der Flaschen 2 auf dem Zuförderer 3 mittels zweier Trennschienen 17 in drei gleich großen Teilströmen mit jeweils einem eigenen Antriebsmotor 19, 20, 37.

Der Beschleunigungsförderer 7 weist hier nur zwei Antriebsmotoren 21, 22 auf, die über Getriebezüge die insgesamt acht Scharnierbandketten 11 des Beschleunigungsförderers 7 mit in Transportrichtung ansteigender Geschwindigkeit antreiben. Die drei Antriebsmotoren der drei parallelen Abförderer 4, 5 und 6 sind nicht dargestellt, genauso wenig wie die entsprechend dreifach angeordneten Überwachungsvorrichtungen.

Mit der vorbeschriebenen Vorrichtung 1' können mittels eines einzigen Beschleunigungsförderers 7 gleich drei Einzelreihen druckarm und mit hoher Geschwindigkeit erzeugt werden, da sich auch hier die Flaschenbewegung der Teilströme nicht gegenseitig beeinflussen kann.

Bei den vorbeschriebenen Ausführungsbeispielen sind die Scharnierbandketten 11 des Beschleunigungsförderers 7 in einer horizontalen Ebene angeordnet. Es ist jedoch auch möglich, die Fördererebene des Beschleunigungsförderers 7 mit einer leichten Querneigung zu den Abförderern hin ansteigend oder abfallend anzuordnen. Im ersteren Falle bleibt die Anordnung der Führungen 8, 9, 10 im Wesentlichen unverändert, während im zweiten Falle die Führungen auf der anderen, d. h. in Transportrichtung gesehen rechten Seite des jeweiligen Teilstroms anzuordnen ist, um die Flaschen 2 an der Talseite des sich beschleunigenden und verjüngenden Flaschenstroms abzustützen. Diese Varianten ermöglichen einen besonders niedrigen Lärmpegel und die Verarbeitung problematischer Formflaschen oder dgl.. Auch eine Anordnung von mehr als drei Führungen auf einem einzigen Beschleunigungsförderer ist denkbar.

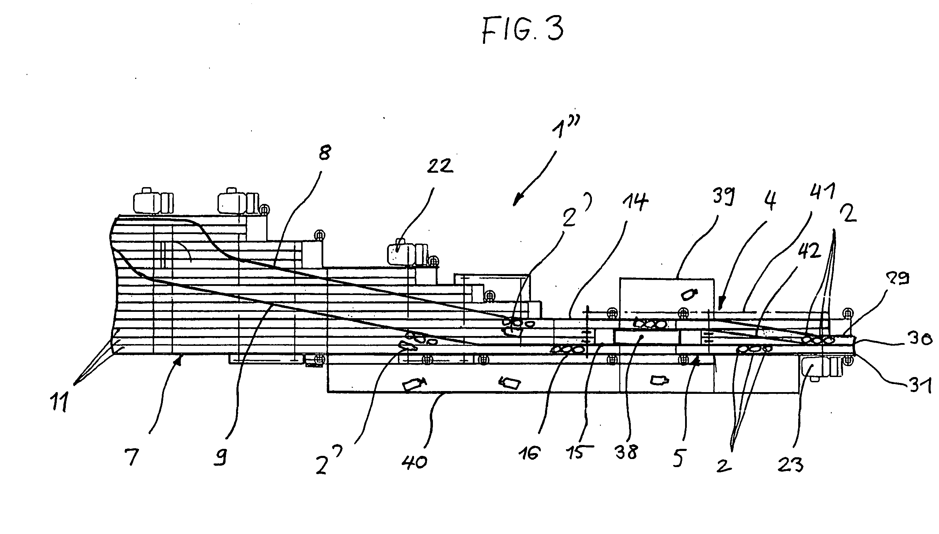

Die Transportvorrichtung 1" nach Fig. 3 stimmt größtenteils mit der Vorrichtung nach Fig. 1 überein. Im Nachstehenden werden daher nur die Abweichungen beschrieben.

Bei der Transportvorrichtung 1" ist das äußere Geländer 16 am Rand des Beschleunigungsförderers 7 mit einem Abstand über der Förderebene angeordnet, der etwas größer ist als der Durchmesser der Flaschen 2. Liegende Flaschen 2' des rechten Teilstroms neben der Führung 9 können daher unter dem Geländer 16 hindurch in einen neben der äußersten Scharnierbandkette 11 angeordneten Sammelbehälter 40 gelangen.

Für liegende Flaschen 2' im Bereich des linken Teilstroms neben der Führung 8 ist eine eigene Öffnung 38 vorgesehen, die das Ausscheiden liegender Flaschen 2' gestattet. Unter dieser Öffnung 38 ist ein weiterer Sammelbehälter 39 für liegende Flaschen angeordnet. Die Öffnung 38 ist in der durch die Scharnierbandketten 11 definierten Förderebene im Endbereich des Beschleunigungsförderers 7 bzw. im Anfangsbereich des Abförderers 4 ausgebildet, wo die Flaschen 2 normalerweise bereits eine Einzelreihe bilden. Die Öffnung 38 befindet sich direkt neben dieser Einzelreihe, so dass neben dieser mitgeführte liegende Flaschen 2' durch die Öffnung 38 hindurch in den Sammelbehälter 39 fallen. Die Öffnung 38 ist wesentlich größer als der Umriss einer liegenden Flasche 2'. Auf diese Weise ist sichergestellt, dass auch umgefallene Flaschen 2' im Bereich des linken Teilstroms zuverlässig ausgeschieden werden.

Die Öffnung 38 ist durch eine Unterbrechung zwischen zwei fluchtenden, nebeneinander liegenden Scharnierbandketten 11 des Beschleunigungsförderers 7 bzw. des linken Abförderers 4 gebildet. Durch ein Kettengetriebe 41 werden die fluchtenden Scharnierbandketten 11 über den Motor 23 synchron zueinander mit der gewünschten Geschwindigkeit angetrieben. Durch ein zusätzliches Geländerstück 42 wird im Anschluss an die Öffnung 38 eine exakte Führung der Einzelreihe gewährleistet.

Die vorbeschriebene Transportvorrichtung 1" ist insbesondere für Flaschen 2 mit geringer Standfestigkeit, wie z. B. schlanke PET-Flaschen mit Petaloidboden geeignet, die unter Umständen beim Zusammenführen entlang der Führungen 8, 9 umfallen können.

## Patentansprüche

1. Transportvorrichtung (1) zum druckarmen Umformen eines Stroms von Flaschen (2) oder dgl. in mindestens zwei getrennte Einzelreihen, mit einem mehrbahnigen Zuförderer (3), mindestens zwei einbahnigen Abförderern (4, 5, 6), einem zwischen Zuförderer und Abförderern angeordneten Beschleunigungsförderer (7), der mehrere Abschnitte mit in Transportrichtung ansteigender Geschwindigkeit aufweist, sowie mit einer schräg über den Zwischenförderer (7) verlaufenden Führung, **dadurch gekennzeichnet, dass** mit seitlichem Abstand zur ersten Führung (8) mindestens eine zweite, schräg über den Beschleunigungsförderer (7) verlaufende Führung (9, 10) angeordnet ist, und dass die Führungen (8, 9, 10) jeweils einen Teilstrom des vom Zuförderer (3) kommenden Stroms von Flaschen (2) oder dgl. über die Abschnitte des gemeinsamen Beschleunigungsförderers (7) leiten.

2. Transportvorrichtung nach Anspruch 1, **dadurch gekennzeichnet, dass** jedem einbahnigen Abförderer (4, 5, 6) eine eigene Führung (8, 9, 10) zugeordnet ist.

3. Transportvorrichtung nach Anspruch 2, **dadurch gekennzeichnet, dass** jede Führung (8, 9, 10) kontinuierlich in ein Gländer (14, 15, 16) des zugehörigen Abförderers (4, 5, 6) einmündet.

4. Transportvorrichtung nach Anspruch 1 bis 3, **dadurch gekennzeichnet, dass** jedem einbahnigen Abförderer (4, 5, 6) ein eigener abgetrennter Teilabschnitt des Zuförderers (3) zugeordnet ist.

5. Transportvorrichtung nach Anspruch 4, **dadurch gekennzeichnet, dass** jede Führung (8, 9, 10) kontinuierlich in ein Geländer (12) oder eine Trennschiene (17) des Zuförderers (3) einmündet.

6. Transportvorrichtung nach Anspruch 4 oder 5, **dadurch gekennzeichnet, dass** jeder Teilabschnitt des Zuförderers (3) einen eigenen Antriebsmotor (19, 20, 37) aufweist, der durch eine Überwachungseinrichtung (32, 33) am zugehörigen Abförderer (4, 5, 6) steuerbar ist.

7. Transportvorrichtung nach einem der Ansprüche 1 bis 6, **dadurch gekennzeichnet, dass** jeder einbahnige Abförderer (4, 5, 6) einen eigenen Antriebsmotor (24, 25) aufweist, der durch eine Überwachungseinrichtung (34, 35) an einem nachgeschalteten Förderer (26) steuerbar ist.

8. Transportvorrichtung nach einem der Ansprüche 1 bis 7, **gekennzeichnet durch** mindestens eine Öffnung (38) die das Ausscheiden liegender Flaschen (2') gestattet.

9. Transportvorrichtung nach Anspruch 8, **dadurch gekennzeichnet, dass** mindestens eine Öffnung (38) im Endbereich des Beschleunigungsförderers (7) und/oder im Anfangsbereich eines Abförderers (4, 5, 6) angeordnet ist.

10. Transportvorrichtung nach Anspruch 8 oder 9, **dadurch gekennzeichnet, dass** die Öffnung (38) im Bereich des Teilstroms angeordnet ist, wo die Flaschen (2) bereits eine Einzelreihe bilden, vorzugsweise neben dieser Einzelreihe.

11. Transportvorrichtung nach einem der Ansprüche 8 bis 10, **dadurch gekennzeichnet, dass** die Öffnung (38) einen größeren Querschnitt aufweist als eine liegende Flasche (2').

12. Transportvorrichtung nach einem der Ansprüche 8 bis 11, **dadurch gekennzeichnet, dass** die Öffnung (38) zwischen zwei oder mehreren fluchtenden Scharnierbandketten (11) ausgebildet ist.

## Claims

1. Transport apparatus (1) for the low-pressure transforming of a stream of bottles (2) or the like into at least two separate single rows, comprising a multiple-lane feed conveyor (3), at least two single-lane discharge conveyors (4, 5, 6), an acceleration conveyor (7) arranged between the feed conveyor and the discharge conveyors, which acceleration conveyor comprises a plurality of sections having a speed which increases in the transport direction, and also a guide which runs diagonally across the intermediate conveyor (7), **characterised in that** at least one second guide (9, 10) which runs diagonally across the acceleration conveyor (7) is arranged at a lateral distance from the first guide (8), and **in that** the guides (8, 9, 10) in each case guide a sub-stream of the stream of bottles (2) or the like coming from the feed conveyor (3) across the sections of the common acceleration conveyor (7).

2. Transport apparatus according to claim 1, **characterised in that** each single-lane discharge conveyor (4, 5, 6) is assigned its own guide (8, 9, 10).

3. Transport apparatus according to claim 2, **characterised in that** each guide (8, 9, 10) merges continuously into a railing (14, 15, 16) of the associated discharge conveyor (4, 5, 6).

4. Transport apparatus according to claims 1 to 3, **characterised in that** each single-lane discharge conveyor (4, 5, 6) is assigned its own separate sub-section of the feed conveyor (3).

5. Transport apparatus according to claim 4, **characterised in that** each guide (8, 9, 10) merges continuously into a railing (12) or a dividing rail (17) of the feed conveyor (3).

6. Transport apparatus according to claim 4 or 5, **characterised in that** each sub-section of the feed conveyor (3) has its own drive motor (19, 20, 37) which can be controlled by a monitoring device (32, 33) on the associated discharge conveyor (4, 5, 6).

7. Transport apparatus according to one of claims 1 to 6, **characterised in that** each single-lane discharge conveyor (4, 5, 6) has its own drive motor (24, 25) which can be controlled by a monitoring device (34, 35) on a downstream conveyor (26).

8. Transport apparatus according to one of claims 1 to 7, **characterised by** at least one opening (38) which makes it possible to discard horizontal bottles (2').

9. Transport apparatus according to claim 8, **characterised in that** at least one opening (38) is arranged in the end region of the acceleration conveyor (7) and/or in the start region of a discharge conveyor (4, 5, 6).

10. Transport apparatus according to claim 8 or 9, **characterised in that** the opening (38) is arranged in the region of the sub-stream, where the bottles (2) already form a single row, preferably next to this single row.

11. Transport apparatus according to one of claims 8 to 10, **characterised in that** the opening (38) has a cross section larger than a horizontal bottle (2').

12. Transport apparatus according to one of claims 8 to 11, **characterised in that** the opening (38) is formed between two or more aligned flat-top chains (11).

## Revendications

1. Dispositif de transport (1) pour la transformation sous faible pression d'un flux de bouteilles (2) ou similaires en au moins deux rangées simples séparées, avec un convoyeur d'amenée (3) à plusieurs voies, au moins deux convoyeurs d'évacuation à une seule voie (4, 5, 6), un convoyeur d'accélération (7) disposé entre le convoyeur d'amenée et les convoyeurs d'évacuation, lequel présente plusieurs sections à vitesse croissante dans la direction de transport, ainsi qu'avec un guidage à tracé oblique sur le convoyeur intermédiaire (7), **caractérisé en ce qu'**au moins un deuxième guidage (9, 10) à tracé oblique sur le convoyeur d'accélération(7) est disposé à intervalle latéral du premier guidage (8), et **en ce que** les guidages (8, 9, 10) conduisent chacun un flux partiel du flux de bouteilles (2) ou similaires arrivant du convoyeur d'amenée (3) sur les sections du convoyeur d'accélération (7) commun.

2. Dispositif de transport selon la revendication 1, **caractérisé en ce qu'**à chaque convoyeur d'évacuation à une seule voie (4, 5, 6) correspond un guidage propre (8, 9, 10).

3. Dispositif de transport selon la revendication 2, **caractérisé en ce que** chaque guidage (8, 9, 10) débouche de manière continue dans une rampe (14, 15, 16) du convoyeur d'évacuation (4, 5, 6) correspondant.

4. Dispositif de transport selon les revendications 1 à 3, **caractérisé en ce qu'**à chaque convoyeur d'évacuation à une seule voie (4, 5, 6) correspond une section partielle séparée propre du convoyeur d'amenée (3).

5. Dispositif de transport selon la revendication 4, **caractérisé en ce que** chaque guidage (8, 9, 10) débouche de manière continue dans une rampe (12) ou un rail de séparation (17) du convoyeur d'amenée (3).

6. Dispositif de transport selon la revendication 4 ou la revendication 5, **caractérisé en ce que** chaque section partielle du convoyeur d'amenée (3) comporte un moteur d'entraînement (19, 20, 37) propre, lequel peut être commandé par un dispositif de surveillance (32, 33) sur le convoyeur d'évacuation (4, 5, 6) correspondant.

7. Dispositif de transport selon l'une des revendications 1 à 6, **caractérisé en ce que** chaque convoyeur d'évacuation à une seule voie (4, 5, 6) comporte un moteur d'entraînement (24, 25) propre, lequel peut être commandé par un dispositif de surveillance (34, 35) sur un convoyeur (26) en aval.

8. Dispositif de transport selon l'une des revendications 1 à 7, **caractérisé par** au moins une ouverture (38) permettant la séparation de bouteilles couchées (2').

9. Dispositif de transport selon la revendication 8, **caractérisé en ce qu'**au moins une ouverture (38) est disposée dans la zone d'extrémité du convoyeur d'accélération (7) et/ou dans la zone de départ d'un convoyeur d'évacuation (4, 5, 6).

10. Dispositif de transport selon la revendication 8 ou la revendication 9, **caractérisé en ce que** l'ouverture (38) est disposée dans la zone du flux partiel, où les bouteilles (2) forment déjà une rangée simple, de préférence à côté de ladite rangée simple.

11. Dispositif de transport selon l'une des revendications 8 à 10, **caractérisé en ce que** l'ouverture (38) présente une section transversale supérieure à celle d'une bouteille couchée (2').

12. Dispositif de transport selon l'une des revendications 8 à 11, **caractérisé en ce que** l'ouverture (38) est ménagée entre deux ou plusieurs chaînes charnières (11) alignées.
